# EUROPEAN PATENT APPLICATION

(11) **EP 4 660 970 A1**
(43) Date of publication of application: **10.12.2025**
(21) Application number: 23958619.1
(22) Date of filing: 17.11.2023
(51) Int. Cl.: G06V 20/56

(54) **VEHICLE LANE LINE DETECTION METHOD, ELECTRONIC DEVICE, STORAGE MEDIUM, AND MOBILE PLATFORM**

(71) Applicant: SZ Zhuoyu Technology Co., Ltd., Shenzhen, Guangdong 518055 (CN)
(72) Inventor: CHEN, Xiongtao, Shenzhen, Guangdong 518055 (CN); KUANG, Haiwei, Shenzhen, Guangdong 518055 (CN); XU, Lingyun, Shenzhen, Guangdong 518055 (CN); CHEN, Xiaozhi, Shenzhen, Guangdong 518055 (CN); CHEN, Chao, Shenzhen, Guangdong 518055 (CN)
(74) Representative: Botti & Ferrari S.p.A.
(86) International application number: PCT/CN2023/132282
(87) International publication number: WO 2025/102345

(57) **Abstract**

The present application discloses a lane marking detection method, including: acquiring a front view of a mobile platform; dividing the front view into a plurality of sub-front views from the near to the distant; projecting the plurality of sub-front views into a plurality of BEV sub-views with different resolutions, in which a BEV sub-view that is closer to the mobile platform has a higher resolution; and identifying lane markings based at least on the plurality of BEV sub-views. By using multi-resolution input, the present application can identify different field of view ranges with different resolutions, which solves the problem of missed detection of lane markings with large curvature and ensures sufficient identification distance as much as possible.

## Description

### TECHNICAL FIELD

The present application relates to the technical field of autonomous driving, and in particular to a lane marking detection method, an electronic device, a storage medium and a mobile platform.

### BACKGROUND

False detection and missed detection of lane markings have a significant impact on vehicle control for autonomous driving, which is a long-standing problem in the relevant field. Semantic Segmentation is a mainstream method currently used for lane marking detection, which determines lane markings, road markers, and other scene information by classifying each pixel on sensor images.

In the process of implementing the present application, the inventor found that in the lane marking detection method of prior arts, in order to ensure sufficient identification distance, the longitudinal pixel density of a bird's-eye view is often relatively small, which makes the pixels of transverse or large curvature lane markings too few, resulting in serious missed detection of transverse or diagonal lane markings (commonly found in large curvature curves) and a poor identification performance. In addition, real-time requirement of autonomous driving restricts the input resolution size, and single view (bird's-eye view or front view) restricts the model's identification capability. In most current methods, lane markings are identified based on single-view division of front view (FV) or bird's-eye view (BEV). However, the front view has poor identification performance on distant objects, and the BEV is prone to false detection of objects similar to lane markings, such as guardrails and curbs.

### SUMMARY

Embodiments of the present application provide a lane marking detection method, an electronic device, a storage medium, and a mobile platform for solving at least one of the above technical problems.

In a first aspect, an embodiment of the present application provides a lane marking detection method, including:
acquiring a front view of a mobile platform;
dividing the front view into a plurality of sub-front views from the near to the distant;
projecting the plurality of sub-front views into a plurality of BEV sub-views with different resolutions, in which a BEV sub-view closer to the mobile platform has a higher resolution;
identifying lane markings based at least on the plurality of BEV sub-views.

In some embodiments, the identifying lane markings based at least on the plurality of BEV sub-views includes: identifying lane marking pixels in the plurality of BEV sub-views to obtain a lane marking identification result.

In some embodiments, the identifying lane marking pixels in the plurality of BEV sub-views to obtain a lane marking identification result includes:
inputting the plurality of BEV sub-views into a deep neural network to identify the lane marking pixels in the plurality of BEV sub-views to obtain the lane marking identification result.

In some embodiments, the inputting the plurality of BEV sub-views into a deep neural network to identify lane marking pixels in the plurality of BEV sub-views to obtain a lane marking identification result includes:
inputting the plurality BEV sub-views into the deep neural network to extract high-level features and low-level features; and
identifying the lane marking pixels based on the high-level features and low-level features to obtain the lane marking identification result.

In some embodiments, the lane marking detection method further includes acquiring a scene semantic understanding result of the front view, and
the identifying lane markings based at least on the plurality of BEVs includes: identifying the lane markings based on the scene semantic understanding result and the plurality of BEV sub-views.

In some embodiments, the identifying the lane markings based on the scene semantic understanding result and the plurality of BEV sub-views includes:
projecting the scene semantic understanding result of the front view into a BEV scene semantic understanding result in a BEV;
determining a first lane marking identification result based on the plurality of BEV sub-views; and
filtering the first lane marking identification result based on the BEV scene semantic understanding result to obtain a second lane marking identification result.

In some embodiments, the BEV scene semantic understanding result includes probabilities that a plurality of pixels in a BEV scene projected from the front view are non-lane marking pixels; and the first lane marking identification result includes probabilities that a plurality of pixels in the plurality of BEV sub-views are lane marking pixels.

In some embodiments, the filtering the first lane marking identification result based on the BEV scene semantic understanding result to obtain a second lane marking identification result includes:
filtering to determine lane marking pixels in the plurality of BEV sub-views based on the probabilities that the plurality of pixels in a BEV scene projected from the front view are non-lane marking pixels and the probabilities that the plurality of pixels in the plurality of BEV sub-views are lane marking pixels.

In some embodiments, the filtering to determine lane marking pixels in the plurality of BEV sub-views based on the probabilities that the plurality of pixels in a BEV scene projected from the front view are non-lane marking pixels and the probabilities that the plurality of pixels in the plurality of BEV sub-views are lane marking pixels includes:
determining probabilities that the plurality of pixels in the BEV scene projected from the front view are non-lane marking pixels;
filtering for a pixel from the plurality of pixels with a probability of being non-lane marking pixel greater than a first preset probability to determine it as a non-lane marking pixel.

In some embodiments, the filtering to determine lane marking pixels in the plurality of BEVs, based on the probabilities that the plurality of pixels in a BEV scene projected from the front view are non-lane marking pixels and the probabilities that the plurality of pixels in the plurality of BEV sub-views are lane marking pixels includes:
filtering for a pixel with a probability of being lane marking pixel greater than a second preset probability from the plurality of pixels in the plurality of BEV sub-views to determine it as a lane marking pixel.

In some embodiments, the filtering to determine lane marking pixels in the plurality of BEV sub-views, based on the probabilities that the plurality of pixels in a BEV scene projected from the front view are non-lane marking pixels and the probabilities that the plurality of pixels in the plurality of BEV sub-views are lane marking pixels includes:
determining probabilities that the plurality of pixels in a BEV scene projected from the front view are non-lane marking pixels;
filtering for pixels from the plurality of pixels with a probability of being non-lane marking pixel greater than a first preset probability and determining them as a first set of non-lane marking pixels;
filtering for pixels from the plurality of pixels in the plurality of BEV sub-views with a probability of being a lane marking pixel that is less than a second preset probability, to determine them as a second set of non-lane marking pixels;
filtering for pixels in the plurality of BEV sub-views other than the first set of non-lane marking pixels and the second set of non-lane marking pixels to determine them as lane marking pixels.

In some embodiments, the lane marking detection method further includes: generating front view lane markings in the front view based on the determined lane marking pixels in the plurality of BEV sub-views.

In some embodiments, the generating front view lane markings in the front view based on the determined lane marking pixels in the plurality of BEV sub-views includes:
generating a plurality of sub-lane markings in each BEV sub-view based on the determined lane marking pixels in the plurality BEV sub-views;
projecting the plurality of sub-lane markings back into the front view to generate front view lane markings.

In a second aspect, embodiments of the present application provide an electronic device including: at least one processor, and a memory communicatively coupled to the at least one processor, wherein the memory stores instructions executable by the at least one processor, the instructions being executed by the at least one processor to perform the following steps:
acquiring a front view of a mobile platform;
dividing the front view into a plurality of sub-front views from the near to the distant;
projecting the plurality of sub-front views into a plurality of BEV sub-views with different resolutions, in which a BEV sub-view closer to the mobile platform has a higher resolution; and
identifying lane markings based at least on the plurality of BEV sub-views.

In some embodiments, the identifying lane markings based at least on the plurality of BEV sub-views includes: identifying lane marking pixels in the plurality of BEV sub-views to obtain a lane marking identification result.

In some embodiments, the identifying lane marking pixels in the plurality of BEV sub-views to obtain a lane marking identification result includes:
inputting the plurality of BEV sub-views into a deep neural network to identify the lane marking pixels in the plurality of BEV sub-views to obtain the lane marking identification result.

In some embodiments, the inputting the plurality of BEV sub-views into a deep neural network to identify lane marking pixels in the plurality of BEV sub-views to obtain a lane marking identification result includes:
inputting the plurality BEV sub-views into the deep neural network to extract high-level features and low-level features; and
identifying the lane marking pixels based on the high-level features and low-level features to obtain the lane marking identification result.

In some embodiments, the electronic device further includes acquiring a scene semantic understanding result of the front view, and

the identifying lane markings based at least on the plurality of BEVs includes: identifying the lane markings based on the scene semantic understanding result and the plurality of BEV sub-views.

In some embodiments, the identifying the lane markings based on the scene semantic understanding result and the plurality of BEV sub-views includes:
projecting the scene semantic understanding result of the front view into a BEV scene semantic understanding result in a BEV;
determining a first lane marking identification result based on the plurality of BEV sub-views; and
filtering the first lane marking identification result based on the BEV scene semantic understanding result to obtain a second lane marking identification result.

In some embodiments, the BEV scene semantic understanding result includes probabilities that a plurality of pixels in a BEV scene projected from the front view are non-lane marking pixels; and the first lane marking identification result includes probabilities that a plurality of pixels in the plurality of BEV sub-views are lane marking pixels.

In some embodiments, the filtering the first lane marking identification result based on the BEV scene semantic understanding result to obtain a second lane marking identification result includes:
filtering to determine lane marking pixels in the plurality of BEV sub-views based on the probabilities that the plurality of pixels in a BEV scene projected from the front view are non-lane marking pixels and the probabilities that the plurality of pixels in the plurality of BEV sub-views are lane marking pixels.

In some embodiments, the filtering to determine lane marking pixels in the plurality of BEV sub-views based on the probabilities that the plurality of pixels in a BEV scene projected from the front view are non-lane marking pixels and the probabilities that the plurality of pixels in the plurality of BEV sub-views are lane marking pixels includes:
determining probabilities that the plurality of pixels in the BEV scene projected from the front view are non-lane marking pixels;
filtering for a pixel from the plurality of pixels with a probability of being non-lane marking pixel greater than a first preset probability to determine it as a non-lane marking pixel.

In some embodiments, the filtering to determine lane marking pixels in the plurality of BEVs, based on the probabilities that the plurality of pixels in a BEV scene projected from the front view are non-lane marking pixels and the probabilities that the plurality of pixels in the plurality of BEV sub-views are lane marking pixels includes:
filtering for a pixel with a probability of being lane marking pixel greater than a second preset probability from the plurality of pixels in the plurality of BEV sub-views to determine it as a lane marking pixel.

In some embodiments, the filtering to determine lane marking pixels in the plurality of BEV sub-views, based on the probabilities that the plurality of pixels in a BEV scene projected from the front view are non-lane marking pixels and the probabilities that the plurality of pixels in the plurality of BEV sub-views are lane marking pixels includes:
determining probabilities that the plurality of pixels in a BEV scene projected from the front view are non-lane marking pixels;
filtering for pixels from the plurality of pixels with a probability of being non-lane marking pixel greater than a first preset probability and determining them as a first set of non-lane marking pixels;
filtering for pixels from the plurality of pixels in the plurality of BEV sub-views with a probability of being a lane marking pixel that is less than a second preset probability and determining them as a second set of non-lane marking pixels;
filtering for pixels in the plurality of BEV sub-views other than the first set of non-lane marking pixels and the second set of non-lane marking pixels and determining them as lane marking pixels.

In some embodiments, the electronic device further includes: generating front view lane markings in the front view based on the determined lane marking pixels in the plurality of BEV sub-views.

In some embodiments, the generating front view lane markings in the front view based on the determined lane marking pixels in the plurality of BEV sub-views includes:
generating a plurality of sub-lane markings in each BEV sub-view based on the determined lane marking pixels in the plurality BEV sub-views;
projecting the plurality of sub-lane markings back into the front view to generate front view lane markings.

In a third aspect, embodiments of the present application provide a computer-readable storage medium having on a computer program stored thereon, the computer program, when executed by a processor, performs the lane marking detection method described in any embodiment of the present application.

In a fourth aspect, embodiments of the present application further provide a computer program product including a computer program stored on a storage medium, the computer program including program instructions, which, when being executed by a computer, cause the computer to perform any of the lane marking detection methods described above.

According to the present application, after acquiring a front view of a mobile platform, the front view is divided into a plurality of sub-front views from the near to the distant. Then, the plurality of sub-front views is projected into a plurality of BEV sub-views with different resolutions, in which a BEV sub-view closer to the mobile platform has a higher resolution. This approach enables lane marking identification for different field of view ranges using different resolutions, thereby reducing missed detection of transverse or large curvature lane markings closer to the mobile platform. In addition, since real-time requirement for autonomous driving restricts the input resolution size, the present application does not simply adopt high-resolution images in order to enhance the accuracy and reliability of lane marking detection. Instead, by projecting the plurality of sub-front views into a plurality of BEVs with different resolutions, this allows identifying lane markings for different fields of view ranges using different resolutions, so as to ensure the accuracy and reliability of lane marking detection while maximizing a sufficient identification distance as much as possible.

### BRIEF DESCRIPTION OF THE DRAWINGS

In order to more clearly illustrate the technical solutions of the embodiments of the present application, the accompanying drawings that need to be used in the description of the embodiments will be briefly described in the following. Obviously, the illustrated drawings are some embodiments of the present application. Other drawings may be obtained by a person of ordinary skill in the art without inventive effort based on these drawings.
FIG. 1 shows a flowchart of a lane marking detection method according to an embodiment of the present application;
FIG. 2 shows a flowchart of a lane marking detection method according to another embodiment of the present application;
FIG. 3 shows a flowchart of a lane marking detection method according to yet another embodiment of the present application; and
FIG. 4 shows a schematic structure diagram of an electronic device according to an embodiment of the present application.

### DETAILED DESCRIPTION

In order to make the objects, technical solutions and advantages of the embodiments of the present application clearer, the technical solutions in the embodiments of the present application will be specifically described in the following in connection with the accompanying drawings in the embodiments of the present application. Obviously, the described embodiments are part rather than all the embodiments of the present application. Based on the embodiments in the present application, all other embodiments obtained by a person of ordinary skill in the art without inventive efforts shall fall within the scope of the present application.

It should be noted that, where there is no conflict, the embodiments in the present application and the features in these embodiments can be combined with each other.

The present application may be described in the general context of computer-executable instructions executed by a computer, such as a program module. Generally, a program module includes routines, programs, objects, components, data structures, and the like that perform a particular task or implement a particular abstract data type. The present application may also be practiced in a distributed computing environment. In the distributed computing environment, where tasks are performed by remote processing devices connected via a communication network, program modules may be located in local and remote computer storage media including storage devices.

In the present application, "module", "device", "system", and the like refer to a related entities applied to a computer, such as hardware, a combination of hardware and software, software, or software in execution, etc. For example, an element may be, but is not limited to, a process running on a processor, a processor, an object, an executable element, a thread of execution, a program, and/or a computer. An application or script program running on a server, or a server may be an element. One or more elements may be in a process and/or thread of execution, and the elements may be localized on a single computer and/or distributed between two or more computers and may be run by a variety of computer-readable media. Elements may also communicate via local and/or remote processes based on signals having one or more packets of data, e.g., signals that interact with another element in a local system or a distributed system, and/or signals of data that interact with other systems via signals over a network on the Internet.

Finally, it is also noted that in this specification, relational terms such as first and second, etc., are used only to distinguish one entity or operation from another entity or operation, and do not necessarily require or imply the existence of any such actual relationship or order between these entities or operations. The terms "include" and "comprise" not only encompass the listed elements but also include other elements not explicitly listed, as well as elements that are inherent to such processes, methods, articles, or devices. Unless otherwise specified, an element defined by the phrase "comprises..." does not exclude the presence of additional identical elements in the process, method, article, or device that comprises the stated element.

In the process of implementing the present application, the inventor found that in lane marking detection methods of prior arts, in order to ensure a sufficient identification distance, the longitudinal pixel density of a bird's-eye view tends to be relatively small, which makes pixels of transverse or large curvature lane markings too few, resulting in serious missed detection of transverse or diagonal lane markings (commonly found in large curvature curves) and poor identification performance. However, in reality, such types of lane markings tend to be located in a short-range area and do not require a large observation distance. In view of this, the inventor proposes the lane marking detection method of the present application. By using multi-resolution input, it allows lane marking identification for different fields of view ranges using different resolutions. The lane marking detection method in the embodiments of the present application may be applied to an electronic device, which may be mounted on a mobile platform, for example, an automobile with different autonomous driving levels, a mobile robot, and a logistics robot for automatic delivery of parcels, etc., and the present application does not limit this.

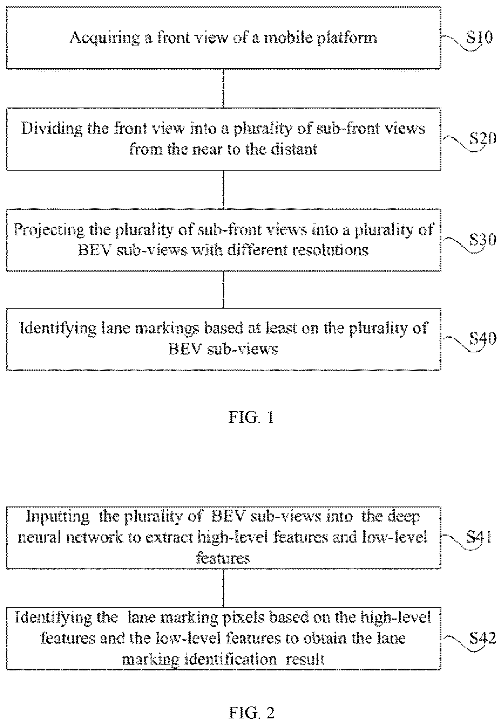

As shown in FIG. 1, a lane marking detection method is provided according to an embodiment of the present application. The method includes the following steps.

In S10, a front view of a mobile platform is acquired.

According to an example, the front view may be acquired by an image acquisition device that is configured to acquire an image. The number of the image acquisition devices may be one, two, or more. The image acquisition device may include an infrared camera, a depth camera, a lidar, a millimeter wave radar, or other image sensors. The image acquisition device may be mounted on the mobile platform to acquire a front view thereof, in which the front view is defined relative to moving direction of the mobile platform. A view in the moving direction of the mobile platform is the front view.

According to an example, when the mobile platform is an automobile, the image acquisition device may be mounted on the roof or the hood of the automobile, etc., which is not limited in the present application. When the automobile is moving forward, the image acquisition device captures a view in the forward direction of the automobile as the front view; and when the automobile is moving backward, the image acquisition device captures a view in the backward direction of the automobile as the front view. The automobile can be equipped with image acquisition devices dedicated to capture images of the view in the forward direction and of the view in the backward direction, respectively, to acquire the front view. Alternatively, an image acquisition device whose orientation can be automatically adjusted according to the direction of travel of the automobile may be installed to acquire the front view. For example, when the automobile is moving forward, the image acquisition device is automatically adjusted to face the front of the automobile, and when the automobile is moving backward, the image acquisition device is automatically adjusted to face the rear of the automobile.

In S20, the front view is divided into a plurality of sub-front views from the near to the distant.

According to an example, after acquiring the front view of the mobile platform, the front view is further divided into a plurality of sub-front views from the near to the distant. The front view may be divided into the plurality of sub-views at equal or unequal distance intervals. Here, "from the near to the distant" is relative to the image acquisition device. For example, the front view of a vehicle is captured by a depth camera, and is divided according to a distance from the depth camera to obtain the plurality of sub-front views. The distance interval may be set differently depending on the resolution of different image sensors. Image sensors with higher resolution can capture clear images at longer distances, and accordingly the distance interval for dividing the images can be larger (e.g., 60m). In contrast, image sensors with a lower resolution can only capture clear images at a shorter distance, and the corresponding distance interval for dividing the images can be smaller (e.g., 30m), the present invention is not limited thereto.

In S30, the plurality of sub-front views is projected into a plurality of BEV sub-views with different resolutions, where a BEV sub-view closer to the mobile platform has a higher resolution.

According to an example, after obtaining the plurality of sub-front views through division, the respective sub-front views are projected as BEV sub-views with different resolutions, where a BEV sub-view that is closer to the mobile platform has a higher resolution. The projection method employed herein may be a method in the prior art, which is not limited in the present application.

In S40, lane marking identification is performed based on at least the plurality of BEV sub-views.

According to an embodiment of the present application, a front view of the mobile platform, after being obtained, is divided into a plurality of sub-front views from the near to the distant. Then, the plurality of sub-front views is further projected into a plurality of BEV sub-views with different resolutions, where a BEV sub-view that is closer to the mobile platform has a higher resolution, thus realizing lane marking identification with different resolutions for different field of view ranges, and solving the problem of missed detection of transverse lane markings or large curvature lane markings that are relatively closes to the mobile platform.

In addition, due to the real-time requirement of autonomous driving, the size of the input resolution is limited. The present application does not simply adopt a high-resolution image to improve the accuracy and reliability of lane marking detection. Instead, by projecting the plurality of sub-front views into a plurality of BEV sub-views with different resolutions, the lane marking identification is performed using different resolutions for different field of view ranges, so as to ensure the accuracy and reliability of lane marking detection while maximizing a sufficient identification distance as much as possible.

In some embodiments, the performing the lane marking identification based on at least the plurality of BEV sub-views may include identifying the lane marking pixels in the plurality of BEV sub-views to obtain the lane marking identification result.

According to an example, semantic segmentation of the plurality of BEV sub-views is performed to accomplish binary classification of pixels in the plurality of BEV sub-views. It is determined whether the pixels in the plurality of BEV sub-views belong to lane marking pixels or background pixels. In some embodiments, the binary classification of the pixels in the BEV sub-views can be performed to obtain a probability of each pixel being a lane marking pixel.

In some embodiments, the lane marking identification result includes probabilities that a plurality of pixels in the plurality of BEV sub-views are lane marking pixels. The lane marking detection method of the present application further includes determining a corresponding pixel to be a lane marking pixel when the probability is greater than a preset probability threshold.

According to an example, the pixels in the plurality of BEV sub-views are binary classified using semantic segmentation to obtain a probability that each pixel in the plurality of BEV sub-views is a lane marking pixel, and a certain pixel is determined as a lane marking pixel when the probability that the certain pixel is a lane marking pixel is greater than a preset probability threshold (e.g., 0.8). The larger the preset probability threshold is, the more accurate and reliable the lane marking identification results obtained. The preset probability threshold is varied depending on the different considerations for the accuracy and reliability of the lane marking detection, the preset probability threshold may be larger (e.g., 0.8) when a higher accuracy is required, and the preset probability threshold (e.g., 0.75) may be a relatively smaller when a higher accuracy is not required.

In some embodiments, a deep neural network is employed for lane marking pixel identification. According to an example, the identifying the lane marking pixels in the plurality of BEV sub-views to obtain the lane marking identification result includes inputting the plurality of BEV sub-views to the deep neural network to identify the lane marking pixels in the plurality of BEV sub-views to obtain the lane marking identification result.

The deep neural network may use LaneNet network structure which is a multi-task model that combines semantic segmentation and pixel vectorization. Semantic segmentation is used to segment lane markings from the background, and pixel vectorization is used to cluster pixels belonging to the same lane marking together. Networks for image segment may include two parts: encoder and decoder, and LaneNet is no exception. The difference is that LaneNet consists of two branches: segmentation branch and embedding branch. The segmentation branch is responsible for semantic segmentation of the input image (e.g., binary classification of pixels to determine whether a pixel belongs to the lane marking or the background), while the embedding branch provides an embedded representation of pixels, which can separate the segmented lane markings into different lane instances, and the trained vectors are used for clustering. Finally, the results of the two branches are clustered using MeanShift algorithm to obtain the segmented results. In some embodiments, the plurality of BEV sub-views have the same size.

In this embodiment, the plurality of BEV sub-views are configured to have the same size, so that they can be integrated into one single input batch for one-time input to the deep neural network, when the deep neural network is used for semantic segmentation, which is beneficial to reduce the processing time and improve the efficiency of lane marking identification.

FIG. 2 shows a flowchart of a lane marking detection method according to another embodiment of the present application. In this embodiment, the inputting the plurality of BEV sub-views into a deep neural network to identify lane marking pixels in the plurality of BEV sub-views to obtain the lane marking identification result includes:

In S41, the plurality of BEV sub-views are inputted into the deep neural network to extract high-level features and low-level features.

High-level features are used to measure semantic similarity, and low-level features are used to measure fine-grained similarity. According to an example, high-level features tend to be complex, uninterpretable features, such as yellow lane markings, ladybug wings, colorful flowers, and so on. Low-level features tend to be generalized, interpretable features, such as textures, colors, edges, corners, and the like.

In S42, the lane marking pixels are identified based on the high-level features and the low-level features to obtain the lane marking identification result.

In this embodiment, the deep neural network gradually extracts the high-level features by performing convolution and downsampling operations on the input BEV sub-views. When the network's downsampling multiplier is too large, although a larger Receptive Field (Receptive Field refers to a region of the input image that a certain point on the feature map can see, i.e., the point on the feature map is calculated from the size of the region of the Receptive Field in the input image) can be obtained, it may also affect the effect of detecting the edges of the object. In order to optimize the detection of longitudinally small objects such as lane markings with large curvature, the present application adopts a neural network structure with multi-scale feature fusion, which fuses the high-level features with the low-level features to extract global information while better preserving the identification effect of object edges.

In some embodiments, the lane marking detection method of the present application further includes acquiring a scene semantic understanding result of the front view. In this case, the identifying the lane markings based on at least the plurality of BEV sub-views includes: identifying the lane markings based on the scene semantic understanding result and the plurality of BEV sub-views.

According to an example, image semantic segmentation is used to perform semantic analysis on the front view to obtain corresponding scene semantic understanding result. Image semantic segmentation is a fundamental technique for image understanding and plays a crucial role in autonomous driving systems (specifically, street scene detection and understanding), drone applications (landing point determination), and wearable device applications. An image consists of many pixels, and "image semantic segmentation", as the name suggests, means grouping pixels according to the different semantic meanings they represent in the image. For example, the pixels representing lane markings in the front view are grouped together. The grouping may also include a probability that each pixel belongs to the corresponding group. In this embodiment, the lane marking pixels included in the front view are obtained by acquiring the scene semantic understanding results of the front view, which are then combined with the plurality of BEV sub-views for lane marking identification.

The embodiments of the present application perform lane marking detection based on both the front view and the BEV. The lane marking identification in the front view can compensate for the false identification problem of lane-like objects in the BEV, whereas the lane marking identification in the multi-resolutions BEVs can solve the missed detection problem of transverse lane markings or large curvature lane markings, and the like.

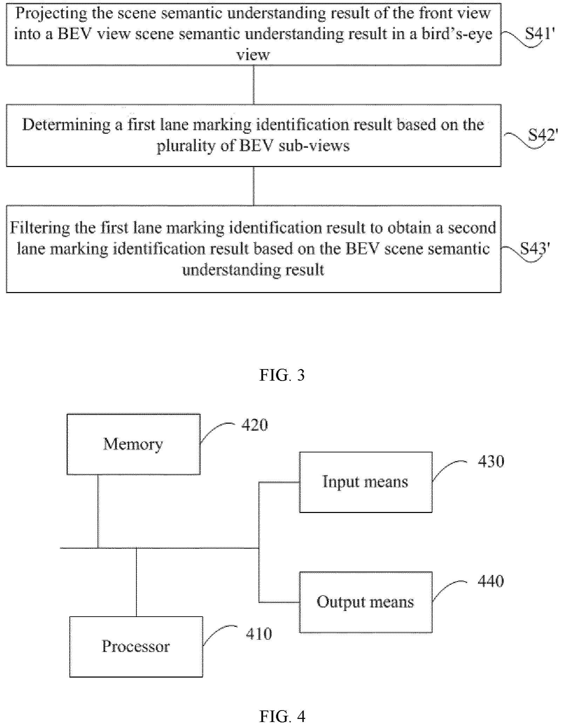

FIG. 3 shows a flowchart of the lane marking detection method according to another embodiment of the present application. In this embodiment, the identifying the lane markings based on the scene semantic understanding result and the plurality of BEV sub-views includes the following steps.

In S41', the scene semantic understanding result of the front view is projected into a BEV scene semantic understanding result in a BEV.

According to an example, scene semantic understanding is generally performed in the front view, which provides better identification effect for nearby or large objects. Objects such as guardrails and light beams in the front view, when projected to the BEV, tend to form objects similar to lane marking. Existing BEV lane marking detection schemes are prone to misidentifying them, which affects the stability of vehicle control. Therefore, in the embodiment of the present application, the scene semantic understanding result of the front view is first projected into a BEV to obtain a BEV scene semantic understanding result. Then, based on the BEV scene semantic understanding result, the objects such as guardrails and light beams can be more accurately predicted, and the predicted non-lane marking pixels can be filtered out, thereby reducing the false detection of lane markings.

According to an example, the scene semantic understanding result of the front view includes identification results of individual pixels (including lane marking pixels and non-lane marking pixels) in the front view. Projecting the scene semantic understanding result of the front view into the BEV scene semantic understanding result in the BEV is to project the identification results of the individual pixels in the front view into the identification results of the individual pixels in the BEV. A specific projection mode can be implemented using existing technologies, which is not limited in the present application.

The pixels in the front view can be projected to the pixels in the BEV, and the corresponding scene semantic understanding result of the front view can also be projected as the scene semantic understanding result of the BEV (i.e., the BEV scene semantic understanding). For example, a guardrail on a road which extends along the road in the BEV is very similar to a lane marking, and therefore identification thereof performed directly in the BEV usually leads to misidentifying the guardrail as a lane marking. The guardrail has a height in the front view, so its corresponding pixel can be identified as a non-lane marking pixel in the semantic understanding of the scene of the front view. Correspondingly, when projected as the scene semantic understanding of the BEV, the corresponding pixel in the BEV can be identified as a non-lane marking.

In S42', the first lane marking identification result is determined based on the plurality of BEV sub-views.

According to an example, lane marking pixels in the plurality of BEV sub-views are identified to obtain a lane marking identification result (i.e., a first lane marking identification result). According to an example, a deep neural network may be employed for the lane marking pixels identification. For example, the identifying the lane marking pixels in the plurality of BEV sub-views to obtain the lane marking identification result (i.e., the first lane marking identification result) includes: inputting the plurality of BEV sub-views into the deep neural network to identify the lane marking pixels in the plurality of BEV sub-views and obtain the lane marking identification result (i.e., the first lane marking identification result). According to an example, the BEV scene semantic understanding result includes probabilities that the plurality of pixels in the BEV scene projected from the front view are non-lane marking pixels, and the first lane marking identification result includes the probabilities that the plurality of pixels in the plurality of BEV sub-views are lane marking pixels.

In S43', the first lane marking identification result is filtered to obtain a second lane marking identification result based on the BEV scene semantic understanding result.

According to an example, the first lane marking identification result includes respective probability values that the respective pixels in the plurality of BEV sub-views are lane marking pixels, and the second lane marking identification result includes the determined lane marking pixels after filtering the first lane marking identification result based on the BEV scene semantic understanding result.

For example, the first lane marking identification result includes three pixels a1, a2, and a3 with the probabilities being lane marking pixels of 0.7, 0.8, and 0.85, respectively. Assuming that it can be determined that a1 and a2 are not lane marking pixels based on the BEV scene semantic understanding result, then the second lane marking identification result determined after filtering will include a3, which is identified as a lane marking pixel.

The present application employs multi-resolution inputs to perform identification for different field of view ranges with different resolutions, so as to facilitate solving the problem of missed identification of transverse lane markings or lane markings with large curvature. Moreover, the scene semantic understanding result of the front view is projected into the BEV, and the non-lane marking pixels predicted by the scene semantic understanding are filtered out, thereby reducing the false detection of lane markings. By fusing and filtering lane markings in the BEV with the help of scene semantic understanding of the front view, the present application can combine the advantages of different views, and can solve the problems of missing identification and false identification of lane markings in the prior arts at the same time.

In some embodiments, the filtering the first lane marking identification result to obtain the second lane marking identification result based on the scene semantic understanding result of the BEV includes: filtering to determine the lane marking pixels in the plurality of BEV sub-views based on the probabilities that the plurality of pixels in the BEV scene projected from the front view are non-lane marking pixels and the probabilities that the plurality of pixels in the plurality of BEV sub-views are lane marking pixels.

In this embodiment, a probability that one pixel is a non-lane marking pixel and a probability that the same pixel is a lane marking pixel can be considered simultaneously to ultimately determine the option that is most likely to be a lane marking pixel.

Embodiments of the present application filter and determine the lane marking pixels in the plurality of BEV sub-views by considering both a probability of a pixel being a non-lane marking pixel in the semantic understanding result of the bird's-eye-down view scene and a probability of a pixel being a lane marking pixel in the plurality of BEV sub-views, so as to obtain the second lane marking identification result. The combination of the two factors improves the accuracy and reliability of the second lane marking identification result, thereby improving the accuracy of lane marking detection.

In some embodiments, the filtering to determine the lane marking pixels in a plurality of BEV sub-views based on the probabilities that a plurality of pixels in a BEV scene projected from a front view are non-lane marking pixels and the probabilities that a plurality of pixels in a plurality of BEV sub-views are lane marking pixels, includes:
determining probabilities that the plurality of pixels in the BEV scene projected from the front view are non-lane marking pixels; and
filtering for a pixel with a probability of being a non-lane marking pixel greater than the first preset probability and determining it as non-lane marking pixel.

In this embodiment, when the probability that a pixel in a BEV scene projected from the current view is a non-lane marking pixel is greater than the first preset probability, it indicates that the pixel is unlikely to be a lane marking pixel. Therefore, the pixel in the corresponding BEV sub-view is determined as a non-lane marking pixel and filtered out accordingly, thus avoiding false detection of lane markings. The first preset probability may be configured to be 0.8, which is not limited herein, and an appropriate first preset probability may be set according to actual needs.

According to an example, when filtering out a lane marking category B that is misidentified as category A in scene parsing (scene semantic understanding), with the probability that a pixel b belongs to the category A in the scene semantic understanding being P_{A}(b), filtering out is performed only when P_{A}(b) > pₐ(such as 0.8), where pₐ is the preset probability value (0 <= pₐ).

In some embodiments, the filtering lane marking pixels based on the probabilities that the plurality of pixels in a BEV scene projected from the front view are non-lane marking pixels and the probabilities that the plurality of pixel in the plurality of BEV sub-views are lane marking pixels includes: filtering a pixel from the plurality of pixels in the plurality of BEV sub-views whose probability of being lane marking pixel is greater than a second preset probability.

In this embodiment, a pixel in the BEV sub-view is determined to be a lane marking pixel when its probability of being a lane marking pixel is greater than the second preset probability. The second preset probability may be configured as 0.9, which is not limited herein, and an appropriate second preset probability may be set according to actual needs.

When filtering out a lane marking category B that is misidentified as category A in scene semantic understanding, with the probability that a pixel b belongs to the lane marking category B being P_{B}(b)), the filtering out is performed only if P_{B}(b) < p_{b} (such as, 0.9), where p_{b} is the preset probability value (p_{b} <= 1).

In some embodiments, the filtering to determine the lane marking pixels in the plurality of BEV sub-views based on the probabilities that the plurality of pixels in the BEV scene projected from the front view are non-lane marking pixels and the probabilities that the plurality of pixels in the plurality of BEV sub-views are lane marking pixels includes:
determining the probabilities that a plurality of pixels in the BEV scene projected from the front view are non-lane marking pixels;
filtering from the plurality of pixels for pixels with a probability of being a non-lane marking pixel greater than a first preset probability to determine them as a first set of non-lane marking pixels;
filtering from the plurality of pixels in the plurality of BEV sub-views for pixels whose probability of being a lane marking pixel is less than a second preset probability to determine them as a second set of non-lane marking pixels; and
filtering from the plurality of pixels in the plurality of BEV sub-views for pixels other than the first set of non-lane marking pixels and the second set of non-lane marking pixels to determine them as lane marking pixels.

In this embodiment, the front view scene semantic understanding result is first projected to the BEV, and the lane markings in the non-drivable area predicted by the scene semantic understanding are filtered out, thereby reducing the misdetection of lane markings. Unlike simply fusing the predicted results, the present application simultaneously utilizes the scene semantic understanding and the observational uncertainty of lane marking detection to combine different scene semantic understandings and lane marking categories to obtain a finer-grained fusion effect. More specifically, when filtering out a lane marking category B that is misidentified as category A in the scene semantic understanding, with the probability of a pixel b belonging to category A in the scene semantic understanding being P_{A}(b), and the probability of belonging to the lane marking category B being P_{B}(b), filtering out is performed only if P_{A}(b) > pₐ(e.g., 0.8) and P_{B}(b)< p_{b}(e.g., 0.9) , where pₐ and p_{b} are predefined probability values (0<= pₐ , p_{b} <=1), respectively. This post-fusion approach of scene semantic information can effectively avoid erroneously filtering out real lane markings.

The embodiments of the present application optimize the identification effect of small objects such as large curvature lane markings or transverse lane markings in the BEV through multi-resolution BEV inputs and multi-scale network design. Meanwhile, with the help of the output and uncertainty of the semantic understanding of the front view scene, the false detection of line-like objects in the BEV is effectively filtered out, thereby optimizing the lane marking detection effect in the BEV in terms of both missed detection and false detection.

In some embodiments, the lane marking detection method further includes generating front view lane markings in the front view based on the determined lane marking pixels in the plurality of BEV sub-views.

According to an example, the generating the front view lane markings in the front view based on the determined lane marking pixels in the plurality of BEV sub-views includes: generating a plurality of sub-lane markings in each BEV sub-view based on the determined lane marking pixels in the plurality of BEV sub-views; and projecting the plurality of sub-lane markings back into the front view to generate the front view lane markings.

In this embodiment, by means of the multi-resolution output fusion method, the different resolution inputs are fused with network inference and scene semantic understanding to obtain the lane marking output results with different resolutions. Then, based on the projection relationship of projecting the front view to the BEV, these results are re-projected and integrated to form a complete front view lane marking output.

In some embodiments, the entire lane marking detection method can be divided into the following steps from input, network processing, post-fusion to output.

### Step 1: Multi-resolution input

A front view (FV) is used as an input. In the traditional BEV detection scheme, a uniform projection resolution is set for the entire image: with a longitudinal identification distance of h meters, a longitudinal pixel density of p pixels per meter, a lateral identification distance of w meters, and a lateral resolution of q pixels per meter. The BEV has a height H = h*p, and a width W = w*q. In order to ensure sufficient identification distance, the longitudinal pixel density p tends to be relatively small, which makes the pixels in the transverse or large curvature lane markings too few and thus difficult to identify. However, this type of lane marking is typically located in a short-range area. Therefore, this method projects the front view (FV) to the BEVs with different resolutions at different ranges. For example, a higher resolution is used for a short-range and a lower resolution is used for a long-range. Meanwhile, these BEVs are ensured to have the same input size, so that they can be integrated into one single input batch, which is fed into a neural network for inference at one time, thereby reducing the processing time.

### Step 2: Neural network structure with multi-scale feature fusion

Deep neural networks gradually extract high-level semantic information by performing convolution and downsampling operations on the inputs. When the network downsampling multiplier is too large, although a larger receptive field can be obtained, it will also affect the detection effect of object edges. In order to optimize the detection of small longitudinal objects such as lane markings with large curvature, the present invention fuses high-level features with low-level features, so as to keeping a better identification of margin of object while extracting global information.

### Step 3: Post fusion of scene semantic information

Scene parsing is generally carried out in the front view, and has a better identification effect for short-range or large-range objects. Objects such as guardrails and light beams in the front view, when projected to the BEV, easily form lane marking-like objects, are likely to be misidentified by the existing BEV lane marking detection scheme, thereby affecting the stability of vehicle control. Therefore, the present method first projects the front view scene semantic understanding result to the BEV, and filters out the lane markings in the non-drivable area predicted by the scene semantic understanding to reduce false detection of lane markings. Unlike simply fusing the predicted results, the present method simultaneously utilizes the observation uncertainty of the scene semantic understanding and lane marking detection, and combines different scene semantic understandings and lane marking categories to obtain a finer-grained fusion effect. More specifically, when filtering out the lane marking of category B that is misidentified to be of category A in the scene semantic understanding, when the probability of a pixel b belonging to the scene semantic understanding category A is P_{A}(b), and the probability of it belonging to the lane marking category B is P_{B}(b), the filtering is performed only if P_{A}(b) > pₐ (0.8) and P_{B}(b)< p_{b} (0.9) , where pₐ and p_{b} are preset probability values (0<=pₐ, p_{b}< =1), respectively. This approach can effectively avoid filtering the real lane markings by mistake.

### Step 4: Fusion of multi-resolution outputs

After network inference and fusion of scene semantic understanding are performed on the inputs of different resolution, the output results of lane markings with different resolutions can be obtained. According to the projection relationship in Step 1, these results are re-projected and integrated to form a complete front view lane marking output.

In some embodiments, the present application further provides an electronic device including at least one processor and a memory communicatively coupled to the at least one processor. The memory stores instructions executable by the at least one processor, which, when being executed by the at least one processor, cause the at least one processor to perform the following steps.

In S10, a front view of a mobile platform is acquired.

According to an example, the front view may be acquired by an image acquisition device that is configured to acquire an image. The number of the image acquisition devices may be one, two, or more. The image acquisition device may include an infrared camera, a depth camera, a lidar, a millimeter wave radar, or other image sensors. The image acquisition device may be mounted on the mobile platform to acquire a front view thereof, in which the front view is defined relative to moving direction of the mobile platform-a view in the moving direction of the mobile platform is the front view.

According to an example, when the mobile platform is an automobile, the image acquisition device may be mounted on the roof or the hood of the automobile, etc., which is not limited in the present application. When the automobile is moving forward, the image acquisition device captures a view in the forward direction of the automobile as the front view; and when the automobile is moving backward, the image acquisition device captures a view in the backward direction of the automobile as the front view. The automobile can be equipped with image acquisition devices dedicated to capture images of the view in the forward direction and of the view in the backward direction, respectively, to acquire the front view. Alternatively, an image acquisition device whose orientation can be automatically adjusted according to the direction of travel of the automobile may be installed to acquire the front view. For example, when the automobile is moving forward, the image acquisition device is automatically adjusted to face the front of the automobile, and when the automobile is moving backward, the image acquisition device is automatically adjusted to face the rear of the automobile.

In S20, the front view is divided into a plurality of sub-front views from the near to the distant.

According to an example, after acquiring the front view of the mobile platform, the front view is further divided into a plurality of sub-front views from the near to the distant. The front view may be divided into the plurality of sub-views at equal or unequal distance intervals. Here, "from the near to the distant" is relative to the image acquisition device. For example, the front view of a vehicle is captured by a depth camera, and is divided according to a distance from the depth camera to obtain the plurality of sub-front views. The distance interval may be set differently depending on the resolution of different image sensors. Image sensors with higher resolution can capture clear images at longer distances, and accordingly the distance interval for dividing the images can be larger (e.g., 60m). In contrast, mage sensors with a lower resolution can only capture clear images at a shorter distance, and the corresponding distance interval for dividing the images can be smaller (e.g., 30m), the present invention is not limited thereto.

In S30, the plurality of sub-front views is projected into a plurality of BEV sub-views with different resolutions, where a BEV sub-view closer to the mobile platform has a higher resolution.

According to an example, after obtaining the plurality of sub-front views through division, the respective sub-front views are projected as BEV sub-views with different resolutions, where a BEV sub-view that is closer to the mobile platform has a higher resolution. The projection method employed herein may be a method in the prior art, which is not limited in the present application.

In S40, lane marking identification is performed based on at least the plurality of BEV sub-views.

According to an embodiment of the present application, a front view of the mobile platform, after being obtained, is divided into a plurality of sub-front views from the near to the distant. Then, the plurality of sub-front views is further projected into a plurality of BEV sub-views with different resolutions, where a BEV sub-view that is closer to the mobile platform has a higher resolution, thus realizing lane marking identification with different resolutions for different field of view ranges, and solving the problem of missed detection of transverse lane markings or large curvature lane markings that are relatively closes to the mobile platform.

In addition, due to the real-time requirement of autonomous driving, the size of the input resolution is limited. The present application does not simply adopt a high-resolution image to improve the accuracy and reliability of lane marking detection. Instead, by projecting the plurality of sub-front views into a plurality of BEV sub-views with different resolutions, the lane marking identification is performed using different resolutions for different field of view ranges, so as to ensure the accuracy and reliability of lane marking detection while maximizing a sufficient identification distance as much as possible.

In some embodiments, the performing the lane marking identification based on at least the plurality of BEV sub-views may include identifying the lane marking pixels in the plurality of BEV sub-views to obtain the lane marking identification result.

According to an example, semantic segmentation of the plurality of BEV sub-views is performed to accomplish binary classification of pixels in the plurality of BEV sub-views. It is determined whether the pixels in the plurality of BEV sub-views belong to lane marking pixels or background pixels. In some embodiments, the binary classification of the pixels in the BEV sub-views can be performed to obtain a probability of each pixel being a lane marking pixel.

In some embodiments, the lane marking identification result includes probabilities that a plurality of pixels in the plurality of BEV sub-views are lane marking pixels. The lane marking detection method of the present application further includes determining a corresponding pixel to be a lane marking pixel when the probability is greater than a preset probability threshold.

According to an example, the pixels in the plurality of BEV sub-views are binary classified using semantic segmentation to obtain a probability that each pixel in the plurality of BEV sub-views is a lane marking pixel, and a certain pixel is determined as a lane marking pixel when the probability that the certain pixel is a lane marking pixel is greater than a preset probability threshold (e.g., 0.8). The larger the preset probability threshold is, the more accurate and reliable the lane marking identification results obtained. The preset probability threshold is varied depending on the different considerations for the accuracy and reliability of the lane marking detection, the preset probability threshold may be larger (e.g., 0.8) when a higher accuracy is required, and the preset probability threshold (e.g., 0.75) may be a relatively smaller when a higher accuracy is not required.

In some embodiments, a deep neural network is employed for lane marking pixel identification. According to an example, the identifying the lane marking pixels in the plurality of BEV sub-views to obtain the lane marking identification result includes inputting the plurality of BEV sub-views to the deep neural network to identify the lane marking pixels in the plurality of BEV sub-views to obtain the lane marking identification result.

The deep neural network may use LaneNet network structure which is a multi-task model that combines semantic segmentation and pixel vectorization. Semantic segmentation is used to segment lane markings from the background, and pixel vectorization is used to cluster pixels belonging to the same lane marking together. Networks for image segment may include two parts: encoder and decoder, and LaneNet is no exception. The difference is that LaneNet consists of two branches: segmentation branch and embedding branch. The segmentation branch is responsible for semantic segmentation of the input image (e.g., binary classification of pixels to determine whether a pixel belongs to the lane marking or the background), while the embedding branch provides an embedded representation of pixels, which can separate the segmented lane markings into different lane instances, and the trained vectors are used for clustering. Finally, the results of the two branches are clustered using MeanShift algorithm to obtain the segmented results. In some embodiments, the plurality of BEV sub-views have the same size.

In this embodiment, the plurality of BEV sub-views are configured to have the same size, so that they can be integrated into one single input batch for one-time input to the deep neural network, when the deep neural network is used for semantic segmentation, which is beneficial to reduce the processing time and improve the efficiency of lane marking identification.

In some embodiments, the inputting the plurality of BEV sub-views into a deep neural network to identify lane marking pixels in the plurality of BEV sub-views to obtain the lane marking identification result includes:

Inputting the plurality of BEV sub-views into the deep neural network to extract high-level features and low-level features. Identifying lane marking pixels based on the high-level features and low-level features to obtain the lane marking identification result.

High-level features are used to measure semantic similarity, and low-level features are used to measure fine-grained similarity. According to an example, high-level features tend to be complex, uninterpretable features, such as yellow lane markings, ladybug wings, colorful flowers, and so on. Low-level features tend to be generalized, interpretable features, such as textures, colors, edges, corners, and the like.

In this embodiment, the deep neural network gradually extracts the high-level features by performing convolution and downsampling operations on the input BEV sub-views. When the network's downsampling multiplier is too large, although a larger Receptive Field can be obtained, it may also affect the effect of detecting the edges of the object. In order to optimize the detection of longitudinally small objects such as lane markings with large curvature, the present application adopts a neural network structure with multi-scale feature fusion, which fuses the high-level features with the low-level features to extract global information while better preserving the identification effect of object edges.

In some embodiments, the processor is further configured to acquire a scene semantic understanding result of the front view. Identifying the lane markings based on at least the plurality of BEV sub-views includes: identifying the lane markings based on the scene semantic understanding result and the plurality of BEV sub-views.

According to an example, image semantic segmentation is used to perform semantic analysis on the front view to obtain corresponding scene semantic understanding result. Image semantic segmentation is a fundamental technique for image understanding and plays a crucial role in autonomous driving systems (specifically, street scene detection and understanding), drone applications (landing point determination), and wearable device applications. An image consists of many pixels, and "image semantic segmentation" , as the name suggests, means grouping pixels according to the different semantic meanings they represent in the image. For example, the pixels representing lane markings in the front view are grouped together. The grouping may also include a probability that each pixel belongs to the corresponding group. In this embodiment, the lane marking pixels included in the front view are obtained by acquiring the scene semantic understanding results of the front view, which are then combined with the plurality of BEV sub-views for lane marking identification.

The embodiments of the present application perform lane marking detection based on both the front view and the BEV. The lane marking identification in the front view can compensate for the false identification problem of lane-like objects in the BEV, whereas the lane marking identification in the multi-resolutions BEVs can solve the missed detection problem of transverse lane markings or large curvature lane markings, and the like.

In some embodiments, the identifying the lane markings based on the scene semantic understanding result and the plurality of BEV sub-views includes the following steps.

The scene semantic understanding result of the front view is projected into a BEV scene semantic understanding result in a BEV. According to an example, scene semantic understanding is generally performed in the front view, which provides better identification effect for nearby or large objects. Objects such as guardrails and light beams in the front view, when projected to the BEV, tend to form objects similar to lane marking. Existing BEV lane marking identification schemes are prone to misidentifying them, which affects the stability of vehicle control. Therefore, in the embodiment of the present application, the scene semantic understanding result of the front view is first projected into a BEV to obtain a BEV scene semantic understanding result. Then, based on the BEV scene semantic understanding result, the objects such as guardrails and light beams can be more accurately predicted, and the predicted non-lane marking pixels can be filtered out, thereby reducing the false detection of lane markings.

A first lane marking identification result is determined based on the plurality of BEV sub-views. According to an example, lane marking pixels in the plurality of BEV sub-views are identified to obtain a lane marking identification result (i.e., a first lane marking identification result). According to an example, a deep neural network may be employed for the lane marking pixels identification. For example, the identifying the lane marking pixels in the plurality of BEV sub-views to obtain the lane marking identification result (i.e., the first lane marking identification result) includes: inputting the plurality of BEV sub-views into the deep neural network to identify the lane marking pixels in the plurality of BEV sub-views and obtain the lane marking identification result (i.e., the first lane marking identification result). According to an example, the BEV scene semantic understanding result includes probabilities that the plurality of pixels in the BEV scene projected from the front view are non-lane marking pixels, and the first lane marking identification result includes the probabilities that the plurality of pixels in the plurality of BEV sub-views are lane marking pixels.

The first lane marking identification result is filtered to obtain a second lane marking identification result based on the BEV scene semantic understanding result. According to an example, the first lane marking identification result includes respective probability values that the respective pixels in the plurality of BEV sub-views are lane marking pixels, and the second lane marking identification result includes the determined lane marking pixels after filtering the first lane marking identification result based on the BEV scene semantic understanding result. For example, the first lane marking identification result includes three pixels a1, a2, and a3 with the probabilities being lane marking pixels of 0.7, 0.8, and 0.85, respectively. Assuming it can be determined that a1 and a2 are not lane marking pixels based on the BEV scene semantic understanding result, then the second lane marking identification result determined after filtering will include a3, which is identified as a lane marking pixel.

The present application employs multi-resolution inputs to perform identification for different field of view ranges with different resolutions to facilitate solving the problem of missed identification of transverse lane markings or lane markings with large curvature. Moreover, the scene semantic understanding result of the front view is projected into the BEV, and the non-lane marking pixels predicted by the scene semantic understanding are filtered out, thereby reducing the false detection of lane markings. By fusing and filtering lane markings in the BEV with the help of scene semantic understanding of the front view, the present application can combine the advantages of different views, and can solve the problems of missing identification and false identification of lane markings in the prior arts at the same time.

In some embodiments, the filtering the first lane marking identification result to obtain the second lane marking identification result based on the scene semantic understanding result of the BEV includes:
filtering to determine the lane marking pixels in the plurality of BEV sub-views based on the probabilities that the plurality of pixels in the BEV scene projected from the front view are non-lane marking pixels and the probabilities that the plurality of pixels in the plurality of BEV sub-views are lane marking pixels.

In this embodiment, a probability that one pixel is a non-lane marking pixel and a probability that the same pixel is a lane marking pixel can be considered simultaneously to ultimately determine the option that is most likely to be a lane marking pixel.

Embodiments of the present application filter and determine the lane marking pixels in the plurality of BEV sub-views by considering both a probability of a pixel being a non-lane marking pixel in the semantic understanding result of the bird's-eye-down view scene and a probability of a pixel being a lane marking pixel in the plurality of BEV sub-views, so as to obtain the second lane marking identification result. The combination of the two factors improves the accuracy and reliability of the second lane marking identification result, thereby improving the accuracy of lane marking identification.

In some embodiments, the filtering to determine the lane marking pixels in a plurality of BEV sub-views based on the probabilities that a plurality of pixels in a BEV scene projected from a front view are non-lane marking pixels and the probabilities that a plurality of pixels in a plurality of BEV sub-views are lane marking pixels, includes:
determining probabilities that the plurality of pixels in the BEV scene projected from the front view are non-lane marking pixels; and
filtering for a pixel with a probability of being a non-lane marking pixel greater than the first preset probability and determining it as non-lane marking pixel.

In this embodiment, when the probability that a pixel in a BEV scene projected from the current view is a non-lane marking pixel is greater than the first preset probability, it indicates that the pixel is unlikely to be a lane marking pixel. Therefore, the pixel in the corresponding BEV sub-view is determined as a non-lane marking pixel and filtered out accordingly, thus avoiding false detection of lane markings. The first preset probability may be configured to be 0.8, which is not limited herein, and an appropriate first preset probability may be set according to actual needs.

According to an example, when filtering out a lane marking category B that is misidentified as category A in scene parsing (scene semantic understanding), with the probability that a pixel b belongs to the category A in the scene semantic understanding being P_{A}(b), filtering out is performed only when P_{A}b) > pₐ(such as 0.8), where pₐ is the preset probability value (0 <= pₐ).

In some embodiments, the filtering lane marking pixels based on the probabilities that the plurality of pixels in a BEV scene projected from the front view are non-lane marking pixels and the probabilities that the plurality of pixel in the plurality of BEV sub-views are lane marking pixels includes:
filtering a pixel from the plurality of pixels in the plurality of BEV sub-views whose probability of being lane marking pixel is greater than a second preset probability.

In this embodiment, a pixel in the BEV sub-view is determined to be a lane marking pixel when its probability of being a lane marking pixel is greater than the second preset probability. The second preset probability may be configured as 0.9, which is not limited herein, and an appropriate second preset probability may be set according to actual needs.

When filtering out a lane marking category B that is misidentified as category A in scene semantic understanding, with the probability that a pixel b belongs to the lane marking category B being P_{B}(b)), the filtering out is performed only if P_{B}(b) < p_{b} (such as, 0.9), where p_{b} is the preset probability value (p_{b} <= 1).

In some embodiments, the filtering to determine the lane marking pixels in the plurality of BEV sub-views based on the probabilities that the plurality of pixels in the BEV scene projected from the front view are non-lane marking pixels and the probabilities that the plurality of pixels in the plurality of BEV sub-views are lane marking pixels includes:
determining the probabilities that a plurality of pixels in the BEV scene projected from the front view are non-lane marking pixels;
filtering from the plurality of pixels for pixels with a probability of being a non-lane marking pixel greater than a first preset probability to determine them as a first set of non-lane marking pixels;
filtering from the plurality of pixels in the plurality of BEV sub-views for pixels whose probability of being a lane marking pixel is less than a second preset probability to determine them as a second set of non-lane marking pixels; and
filtering from the plurality of pixels in the plurality of BEV sub-views for pixels other than the first set of non-lane marking pixels and the second set of non-lane marking pixels to determine them as lane marking pixels.

In this embodiment, the front view scene semantic understanding result is first projected to the BEV, and the lane markings in the non-drivable area predicted by the scene semantic understanding are filtered out, thereby reducing the misdetection of lane markings. Unlike simply fusing the predicted results, the present application simultaneously utilizes the scene semantic understanding and the observational uncertainty of lane marking detection to combine different scene semantic understandings and lane marking categories to obtain a finer-grained fusion effect. More specifically, when filtering out a lane marking category B that is misidentified as category A in the scene semantic understanding, with the probability of a pixel b belonging to category A in the scene semantic understanding being P_{A}(b), and the probability of belonging to the lane marking category B being PB(b), filtering out is performed only if P_{A}(b) > pₐ(e.g., 0.8) and P_{B}(b)< p_{b}(e.g., 0.9) , where pₐ and p_{b} are predefined probability values (0<= pₐ , p_{b} <=1), respectively. This post-fusion approach of scene semantic information can effectively avoid erroneously filtering out real lane markings.

The embodiments of the present application optimize the identification effect of small objects such as large curvature lane markings or transverse lane markings in the BEV through multi-resolution BEV inputs and multi-scale network design. Meanwhile, with the help of the output and uncertainty of the semantic understanding of the front view scene, the false detection of line-like objects in the BEV is effectively filtered out, thereby optimizing the lane marking detection effect in the BEV in terms of both missed detection and false detection.

In some embodiments, the processor is further configured to generate front view lane markings in the front view based on the determined lane marking pixels in the plurality of BEV sub-views.

According to an example, the generating the front view lane markings in the front view based on the determined lane marking pixels in the plurality of BEV sub-views includes: generating a plurality of sub-lane markings in each BEV sub-view based on the determined lane marking pixels in the plurality of BEV sub-views; and projecting the plurality of sub-lane markings back into the front view to generate the front view lane markings.

In this embodiment, by means of the multi-resolution output fusion, the different resolution inputs are fused with network inference and scene semantic understanding to obtain the lane marking output results with different resolutions. Then, based on the projection relationship of projecting the front view to the BEV, these results are re-projected and integrated to form a complete front view lane marking output.

In some embodiments, the generating the front view lane markings in the front view based on the determined lane marking pixels in the plurality of BEV sub-views includes:
generating a plurality of sub-lane markings in each BEV sub-view based on the determined lane marking pixels in the plurality of BEV sub-views; and
projecting the plurality of sub-lane markings back into the front view to generate the front view lane markings.

Embodiments of the present application also provide a mobile platform, the electronic device of any of the preceding embodiments is installed thereon.

Embodiments of the present application provide a computer-readable storage medium having a computer program stored thereon, when the program is executed by a processor, the lane marking detection method according to any one of the embodiments of the present application is implemented.

Embodiments of the present application further provide a computer program product including a computer program stored on a storage medium. The computer program includes program instructions, which, when being executed by a computer, cause the computer to perform any of the lane marking detection methods described above.

It should be noted that for each of the foregoing method embodiments, a series of actions are described as being combined for simplification purpose. However, those skilled in the art should understand that the present application is not limited by the sequence of the described actions, because according to the present application some steps may be performed in a different order or simultaneously. Secondly, those skilled in the art should also understand that the embodiments described in the specification are all preferred embodiments, and the actions and modules involved are not necessarily essential to the present application. In the above embodiments, each embodiment emphasizes respective aspects. Relevant descriptions on those parts not described in detail in a certain embodiment may be referenced to other embodiments.

FIG. 4 is a schematic diagram of a hardware structure of an electronic device for performing a lane marking detection method provided in another embodiment of the present application. As shown in FIG. 4, the device includes:
one or more processors 410 and a memory 420, in which one processor 410 is taken as an example in FIG. 4.

The device for performing the lane marking detection method may further include an input means 430 and an output means 440.

Processor 410, memory 420, input means 430, and output means 440 may be connected via a bus or in other ways, while the connection via a bus is taken as an example in FIG. 4.

Memory 420, which is a non-volatile computer-readable storage medium, may be used to store non-volatile software programs, non-volatile computer-executable programs, and modules, such as program instructions or modules corresponding to the vehicle control method in the embodiment of the present application. Processor 410 executes various functional applications and data processing of the server by running the non-volatile software programs, instructions, and modules stored in memory 420, i.e., implementing the lane marking detection method in the above embodiments.

The memory 420 may include a program storage area and a data storage area. The program storage area may store an operating system, an application program required for at least one function. The data storage area may store data generated through the use of the device for lane marking detection, etc. Additionally, memory 420 may include a high-speed random access memory, and may also include a non-volatile memory, such as at least one disk memory device, a flash memory device, or other non-volatile solid state memory device. In some embodiments, memory 420 may optionally include memory that is remotely located with respect to processor 410, and such remote memory may be connected to the device for lane marking detection via a network. Examples of the above network include, but are not limited to, the Internet, an intranet, a local area network, a mobile communications network, and combinations thereof.

Input means 430 may receive input numerical or character information, and generate signals related to user settings and function control of the lane marking detection device. Output means 440 may include a display device such as a display screen.

One or more modules are stored in memory 420, and when being executed by one or more processors 410, perform the lane marking detection method in any of the above method embodiments.

The above product can execute the method provided in the embodiments of the present application, with the corresponding functional modules and beneficial effects of executing the method. Technical details not comprehensively described in this embodiment may be found in the methods provided in the embodiments of the present application.

The above-described embodiments of the device are merely illustrative. The units illustrated as separated components may or may not be physically separated. The components shown as units may or may not be physical units, and may be located either in one place or may be distributed across a plurality of network units. Some or all of the modules may be selected as necessary to realize the purpose of embodiments of the present application.

Through the above description of the embodiments, those skilled in the art can clearly understand that the embodiments can be implemented by means of software in conjunction with a general hardware platform, or by means of hardware alone. Based on such understanding, the above technical solution essentially or the part that contributes to the related technology can be embodied in the form of a software product. The computer software product may be stored in a computer-readable storage medium, such as a ROM or RAM, magnetic disks, optical discs, etc., and comprises a number of instructions to enable a computer device (which may be a personal computer, a server, or a network device, etc.) to perform the method of each embodiment or some parts of the embodiments.

Finally, it should be noted that the above embodiments are only used to illustrate the technical solutions of the present application and are not a limitation thereof. Notwithstanding the present application has been described in detail with reference to the foregoing embodiments, it should be understood by a person of ordinary skill in the art that it is still possible to modify the technical solutions described in the foregoing embodiments or make equivalent substitutions for some of the technical features therein. These modifications or substitutions do not make the essence of the corresponding technical solutions depart from the spirit and scope of the technical solutions of the embodiments of the present application.

## Claims

1. A lane marking detection method, comprising:
acquiring a front view of a mobile platform;
dividing the front view into a plurality of sub-front views from the near to the distant;
projecting the plurality of sub-front views into a plurality of BEV sub-views with different resolutions, wherein a BEV sub-view closer to the mobile platform has a higher resolution;
identifying lane markings based at least on the plurality of BEV sub-views.

2. The method according to claim 1, wherein identifying lane markings based at least on the plurality of BEV sub-views comprises:
identifying lane marking pixels in the plurality of BEV sub-views to obtain a lane marking identification result.

3. The method according to claim 2, wherein identifying lane marking pixels in the plurality of BEV sub-views to obtain a lane marking identification result comprises:
inputting the plurality of BEV sub-views into a deep neural network to identify the lane marking pixels in the plurality of BEV sub-views to obtain the lane marking identification result.

4. The method according to claim 3, wherein inputting the plurality of BEV sub-views into a deep neural network to identify the lane marking pixels in the plurality of BEV sub-views to obtain the lane marking identification result comprises:
inputting the plurality of BEV sub-views into the deep neural network to extract high-level features and low-level features; and
identifying the lane marking pixels based on the high-level features and the low-level features to obtain the lane marking identification result.

5. The method according to claim 1, further comprises acquiring a scene semantic understanding result of the front view, and
identifying lane markings based on at least the plurality of BEV sub-views comprises: identifying the lane markings based on the scene semantic understanding result and the plurality of BEV sub-views.

6. The method according to claim 5, wherein identifying the lane markings based on the scene semantic understanding result and the plurality of BEV sub-views comprises:
projecting the scene semantic understanding result of the front view into a BEV scene semantic understanding result in a BEV;
determining a first lane marking identification result based on the plurality of BEV sub-views; and
filtering the first lane marking identification result to obtain a second lane marking identification result based on the BEV scene semantic understanding result.

7. The method according to claim 6, wherein the BEV scene semantic understanding result comprises probabilities that a plurality of pixels in a BEV scene projected from the front view are non-lane marking pixels, and the first lane marking identification result comprises probabilities that a plurality of pixels in the plurality of BEV sub-views are lane marking pixels, and
filtering the first lane marking identification result to obtain a second lane marking identification result based on the BEV scene semantic understanding result comprises:
filtering to determine lane marking pixels in the plurality of BEV sub-views, based on the probabilities that the plurality of pixels in a BEV scene projected from the front view are non-lane marking pixels and the probabilities that the plurality of pixels in the plurality of BEV sub-views are lane marking pixels.

8. The method according to claim 7, wherein filtering to determine lane marking pixels in the plurality of BEV sub-views based on the probabilities that the plurality of pixel in a BEV scene projected from the front view are non-lane marking pixels and the probabilities that the plurality of pixels in the plurality of BEV sub-views are lane marking pixels comprises:
determining probabilities that the plurality of pixels in the BEV scene projected from the front view are non-lane marking pixels; and
filtering for a pixel with a probability of being non-lane marking pixel greater than a first preset probability from the plurality of pixels to determine it as a non-lane marking pixel.

9. The method according to claim 7, wherein filtering to determine lane marking pixels in the plurality of BEV sub-views based on the probabilities that the plurality of pixels in a BEV scene projected from the front view are non-lane marking pixels and the probabilities that the plurality of pixels in the plurality of BEV sub-views are lane marking pixels comprises:
filtering for a pixel with a probability of being lane marking pixel greater than a second preset probability from the plurality of pixels in the plurality of BEV sub-views to determine it as a lane marking pixel.

10. The method according to claim 7, wherein filtering to determine lane marking pixels in the plurality of BEV sub-views based on the probabilities that the plurality of pixels in a BEV scene projected from the front view are non-lane marking pixels and the probabilities that the plurality of pixels in the plurality of BEV sub-views are lane marking pixels comprises:
determining probabilities that a plurality of pixels in a BEV scene projected from the front view are non-lane marking pixels;
filtering for pixels from the plurality of pixels with a probability of being non-lane marking pixel greater than a first preset probability to determine them as a first set of non-lane marking pixels;
filtering for pixels from the plurality of pixels in the plurality of BEV sub-views with a probability of being lane marking pixel less than a second preset probability to determine them as a second set of non-lane marking pixels; and
filtering for pixels in the plurality of BEV sub-views other than the first set of non-lane marking pixels and the second set of non-lane marking pixels to determine them as lane marking pixels.

11. The method according to any one of claims 1-10, further comprises:
generating front view lane markings in the front view based on the determined lane marking pixels in the plurality of BEV sub-views.

12. The method according to claim 11, wherein generating front view lane markings in the front view based on the determined lane marking pixels in the plurality of BEV sub-views comprises:
generating a plurality of sub-lane markings in each BEV sub-view based on the determined lane marking pixels in the plurality of BEV sub-views; and
projecting the plurality of sub-lane markings back into the front view to generate front view lane markings.

13. An electronic device comprising: at least one processor, and a memory communicatively coupled to the at least one processor, wherein the memory stores instructions executable by the at least one processor, the instructions being executed by the at least one processor to perform the following steps:
acquiring a front view of a mobile platform;
dividing the front view into a plurality of sub-front views from the near to the distant;
projecting the plurality of sub-front views into a plurality of BEV sub-views with different resolutions, wherein a BEV sub-view closer to the mobile platform has a higher resolution; and
identifying a lane marking based at least on the plurality of BEV sub-views.

14. A computer-readable storage medium having a computer program stored thereon, **characterized in that**, the computer program, when being executed by a processor, implements the steps of the method according to any one of claims 1-12.

15. A mobile platform on which an electronic device according to claim 13 is installed.
